# EUROPÄISCHE PATENTSCHRIFT

(11) **EP 3 109 363 B1**
(45) Veröffentlichungstag und Bekanntmachung des Hinweises auf die Patenterteilung: **06.12.2017**
(21) Anmeldenummer: 15173542.0
(22) Anmeldetag: 24.06.2015
(51) Int. Cl.: E02B 8/08

(54) **VORRICHTUNG ZUM BEFÖRDERN VON WASSERTIEREN AN BARRIEREN IN GEWÄSSERN**
DEVICE FOR THE TRANSFER OF AQUATIC ANIMALS TO BARRIERS IN BODIES OF WATER
DISPOSITIF DE TRANSPORT D'ANIMAUX AQUATIQUES VERS DES BARRIERES DANS DES EAUX

(43) Veröffentlichungstag der Anmeldung: 28.12.2016
(73) Patentinhaber: Seidl, Georg, 8010 Graz (AT); Fuchs, Anton, 8036 Eggersdorf (AT)
(72) Erfinder: Seidl, Georg, 8010 Graz (AT); Fuchs, Anton, 8036 Eggersdorf (AT)
(74) Vertreter: Schwarz & Partner Patentanwälte OG

(56) Entgegenhaltungen:
- JP-A- H08 311 849
- US-A- 1 591 450

## Beschreibung

Die Erfindung betrifft eine, an einem durch eine Barriere in ein Unterwasser und ein Oberwasser getrenntes Gewässer angeordnete, Vorrichtung zum Befördern von Wassertieren zwischen dem Unterwasser und dem Oberwasser, mit einem Schacht, der einen verschließbaren, unterwasserseitigen Aufstiegseinlass und einen oberwasserseitigen Aufstiegsauslass aufweist, und mit einem im Schacht zwischen dem Aufstiegseinlass und dem Aufstiegsauslass auf- und abbewegbaren Transportbehälter, wobei der Transportbehälter eine dem Aufstiegseinlass zugewandte Aufstiegs-Einlassöffnung und eine dem Aufstiegsauslass zugewandte Auslassöffnung aufweist

Das Dokument US 1 591 450 A offenbart eine Vorrichtung, gemäß dem Oberbegriff des Anspruchs 1, zum Aufstieg von Fischen über ein Querbauwerk in Flüssen, beispielsweise einen Damm, einen sogenannten "Fischlift". Dabei werden die Fische in einem Transportbehälter entlang eines vertikalen Schachtes von einem Unterwasser in ein Oberwasser befördert. Der Transportbehälter schwimmt dabei mittels Schwimmkörpern auf und wird durch Änderung des Wasserspiegels im vertikalen Schacht angehoben oder abgesenkt. Die Änderung des Wasserspiegels im vertikalen Schacht wird durch Schütze, die entsprechend geöffnet oder geschlossen werden, bewirkt. Eine sogenannter "Leitstrom", der mittels eines Rohres vom Oberwasser in das Unterwasser geleitet wird, leitet die Fische zur Einschwimmöffnung im Unterwasser. Ein der Einschwimmöffnung vorgelagertes Reusensystem verhindert ein mögliches Zurückschwimmen der Fische.

Bei dem bekannten Fischlift hat es sich als Nachteil erwiesen, dass kein Abstieg der Fische durchgeführt werden kann. Hierdurch wird flussabwärts gerichtetes Wandern von Fischen unterbunden. Bezüglich Wassertieren, die sich bodennah bewegen, bietet die Vorrichtung weder die Möglichkeit zum Abstieg, noch zum Aufstieg, da die Einstiegshöhe der Einschwimmöffnung zu hoch liegt. Des Weiteren ist bei der bekannten Vorrichtung nicht garantiert, dass die Fische auch wirklich in das Oberwasser ausschwimmen. Dies kann zu einer ungewollt hohen Anfüllung des Transportbehälters und zusätzlich zu einer Erhöhung des Prädationsdruckes führen, was, auch aufgrund nicht vorhandener Fischschutzelemente, während des Aufstiegs zu erhöhten Verlusten von Kleinfischen führen kann.

Es ist die Aufgabe der vorliegenden Erfindung, eine Vorrichtung zum Befördern von Wassertieren über eine Barriere in Gewässern bereitzustellen, bei dem die vorstehenden Nachteile nicht auftreten, und den Wassertieren sowohl das Aufsteigen als auch das Absteigen ermöglicht. Die Verweilzeit der Wassertiere und der Prädationsdruck innerhalb der Transportbox sollen dabei während des Aufstiegs oder des Abstiegs möglichst gering gehalten werden.

Die vorliegende Erfindung löst diese Aufgabe dadurch, dass im Schacht ein oberwasserseitiger Abstiegseinlass und ein über dem Unterwasser positionierter Abstiegsauslass ausgebildet sind, wobei die Auslassöffnung des Transportbehälters dem Abstiegsauslass zugewandt ist, und wobei im Transportbehälter eine Abstiegs-Einlassöffnung ausgebildet ist, die dem Abstiegseinlass des Schachtes zugewandt ist.

Bei einer bevorzugten Ausführung der Erfindung sind im Oberwasser zwei mit dem Oberwasser kommunizierende, voneinander getrennte Becken, eine Auslassrinne und ein Abstiegsbecken, vorgesehen. Durch eine Kopplung von Auslassrinne und Abstiegsbecken mit einem Zwischenbecken wird der Vorteil erhalten, dass die Wassertiere ihren jeweiligen Aufstieg oder Abstieg ungehindert fortsetzen können.

Dabei ist bei einer vorteilhaften Ausführung die Auslassrinne an eine Oberwasser-Beckenkaskade mit vom Fischlift weg ansteigenden Beckenwasserspiegeln, und der Aufstiegseinlass an eine Unterwasser-Beckenkaskade mit von einem Fischlift weg abfallenden Beckenwasserspiegeln angeschlossen. Hierdurch wird das äußerst sensible Einstiegsverhalten und Ausstiegsverhalten von Wassertieren berücksichtigt, um die Einwanderungswahrscheinlichkeit von sowohl bodenorientierten als auch solchen Wassertieren, die sich nahe der Wasseroberfläche bewegen, zu erhöhen.

Das Vorsehen einer lichtdurchlässigen Kuppel am oberen Ende des Schachtes bewirkt ebenfalls eine Erhöhung der Einwanderungstendenz, durch den dadurch erreichten Lichteinfall in das Innere des Schachtes.

In einer vorteilhaften Ausführung der Erfindung läuft zumindest ein Abschnitt des Bodens des Transportbehälters, welcher Bodenabschnitt vorzugsweise aus einer glatten Bodenplatte besteht, zur Auslassöffnung hin nach unten zu. Zum Heben und Senken des Transportbehälters können ein Schwimmkörper und ein zusätzliches Mittel, insbesondere ein Kran, ausgebildet sein. Hierdurch werden ein aktiver Ausschwimmvorgang und ein passiver Ausschwimmvorgang der Wassertiere gewährleistet.

Die Gestaltung des Transportbehälters erfolgt vorteilhaft derart, dass keine natürlichen Elemente, welche den Wassertieren den Charakter von Ersatzhabitaten suggerieren und somit deren Verweildauer im Transportbehälter verlängern könnten, verwendet werden. Zusätzlich weist der Transportbehälter in Bodennähe Fischschutzelemente mit sich verjüngenden Räumen oder Hohlraumelementen auf. So wird dem potentiellen Prädationsdruck im Transportbehälter in allen Phasen bestmöglich entgegenwirkt. Das Vorsehen einer Abstiegsreuse an der Abstiegs-Einlassöffnung des Transportbehälters sowie einer Aufstiegsreuse an der Aufstiegs-Einlassöffnung des Transportbehälters trägt zusätzlich dazu bei, dass die wanderwilligen Wassertiere nicht entgegen ihrem eigentlichen Abstiegswillen in die Becken der Beckenkaskaden zurück schwimmen.

Das erfindungsgemäße Vorsehen eines Gitters beim Aufstiegsauslass verhindert vorteilhaft das ungewollte Einschwimmen von Wassertieren in den Transportbehälter beziehungsweise den Schacht. Dabei wird das Gitter beim Heben beziehungsweise Absenken des Transportbehälters automatisch durch Eingreifen des Transportbehälters in das Gitter mit angehoben beziehungsweise abgesenkt, um so den Aufstiegsauslass freizugeben beziehungsweise zu verschließen.

Eine vorteilhafte Ausführung der Wassertier-Beförderungsvorrichtung sieht weiters ein Dotationsrohr vor, das einen oberwasserseitigen Rohreinlass in einem Dotationsbecken, sowie einen ersten Auslass in den Schacht und einen zweiten Auslass in einen Fischpass des Unterwassers aufweist. Der Durchmesser des ersten Auslasses ist dabei vorteilhafterweise größer dimensioniert als der Durchmesser des zweiten Auslasses. Der Transportbehälter weist eine vergitterte Dotationsöffnung auf, durch welche während des Einschwimmvorgangs der Wassertiere die Leitströmung dotiert wird. Im Schacht angeordnete Putzborsten reinigen die Gitterelemente dieser Dotationsöffnung automatisch wenn der Transportbehälter bei Ausschwimmvorgang in kontaktierendem Abstand an diesen Putzborsten vorbeigeführt wird.

Beim Ausschwimmvorgang im Falle des Abstiegs ermöglicht die vorteilhafte Ausbildung eines Blockierelementes, dass der Transportbehälter während des Ausschwimmvorgangs auf seinem aktuellen Höhenniveau gehalten wird. Dieses Blockierelement wird durch das Heben des Transportbehälters aktiviert und durch das Heben eines Kombinationsschützes deaktiviert.

Weitere vorteilhafte Ausführungsbeispiele der Erfindung werden im Folgenden anhand der Figuren näher erläutert.
Figur 1 zeigt in einer Draufsicht eine erfindungsgemäße Wassertier-Beförderungsvorrichtung in einer schematischen Darstellung.
Figur 2 zeigt einen Schnitt E-E der Wassertier-Beförderungsvorrichtung aus Figur 1.
Figur 3 zeigt einen Schnitt A-A der Wassertier-Beförderungsvorrichtung aus Figur 1.
Figur 4 zeigt einen Schnitt F-F der Wassertier-Beförderungsvorrichtung aus Figur 1.
Figur 5 zeigt in einer schematischen Draufsicht einen erfindungsgemäßen Transportbehälter der Wassertier-Beförderungsvorrichtung.
Figur 6A zeigt einen Schnitt F-F des Transportbehälters aus Figur 5.
Figur 6B zeigt in einer Seitenansicht von rechts den Transportbehälter aus Figur 6A.
Figur 7A zeigt einen Schnitt G-G des Transportbehälters aus Figur 5.
Figur 7B zeigt einen Schnitt H-H des Transportbehälters aus Figur 5.
Figuren 8A bis 8C zeigen einen Schnitt D-D der Wassertier-Beförderungsvorrichtung aus Figur 1, wobei ein Kombinationsschütz für einen Aufstiegseinlass und einen Abstiegsauslass zu verschiedenen Funktionszeitpunkten dargestellt ist.
Figur 9A zeigt einen Schnitt B-B der Wassertier-Beförderungsvorrichtung aus Figur 1, wobei die schematische Darstellung den Zeitpunkt eines Ausschwimmvorgangs bei einem Abstieg darstellt.
Figur 9B zeigt einen Schnitt B-B der Wassertier-Beförderungsvorrichtung aus Figur 1, wobei die schematische Darstellung den Transportkorb zu verschiedenen Zeitpunkten von einem Einschwimmvorgang bei einem Aufstieg und von Ausschwimmvorgängen bem Aufstieg beziehungsweise Abstieg darstellt.
Figur 10A zeigt in einem Detail ein Gitter der erfindungsgemäßen Wassertier-Beförderungsvorrichtung in seinem abgesenkten Grundzustand.

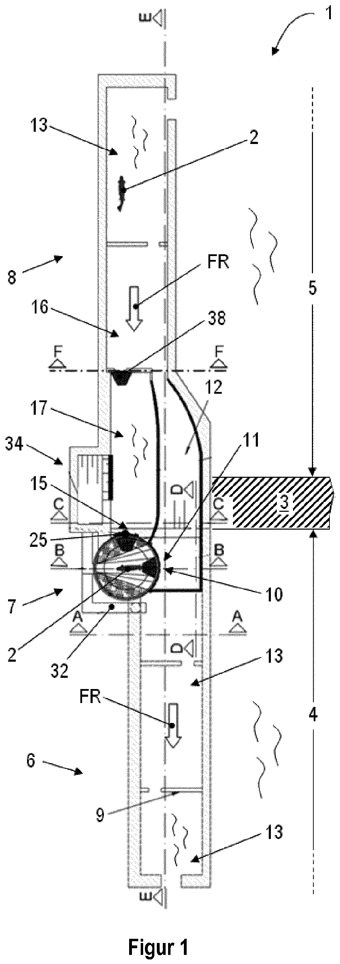

Figur 1BA zeigt in einem Detail das Gitter der erfindungsgemäßen Wassertier-Beförderungsvorrichtung in seinem angehobenen Zustand.

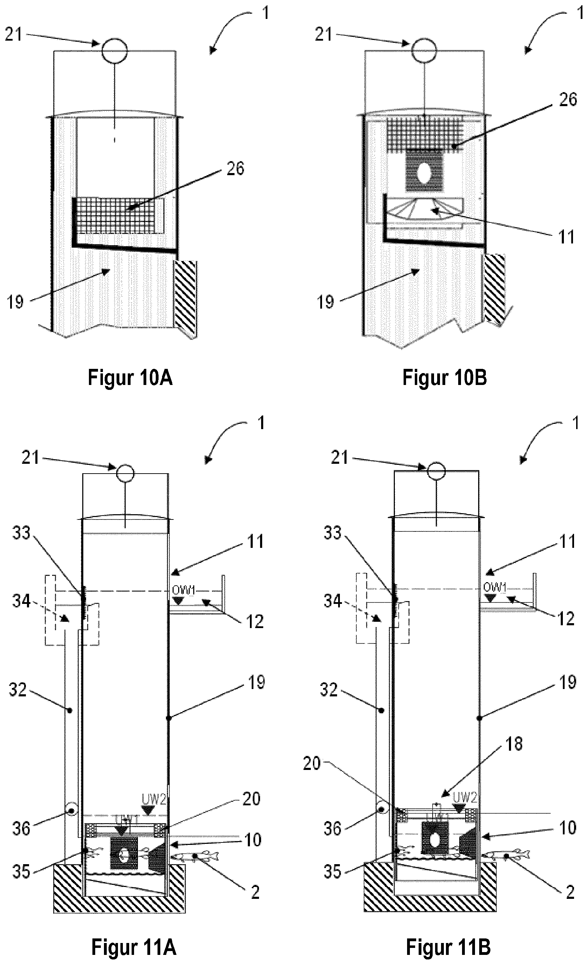

Figur 11A zeigt einen Schnitt B-B der Wassertier-Beförderungsvorrichtung aus Figur 1, wobei die schematische Darstellung einen Zeitpunkt des Einschwimmvorgangs beim Aufstieg bei minimalem Bemessungswasserspiegel im Unterwasser darstellt.
Figur 11B zeigt einen Schnitt B-B der Wassertier-Beförderungsvorrichtung aus Figur 1, wobei die schematische Darstellung einen Zeitpunkt des Einschwimmvorgangs beim Aufstieg bei maximalem Bemessungswasserspiegel im Unterwasser darstellt.

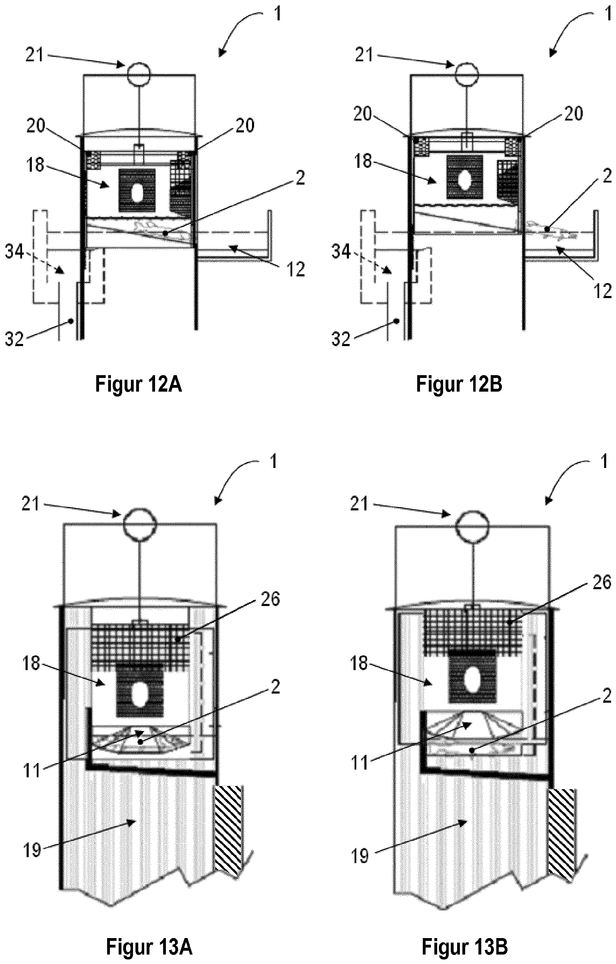

Figur 12A zeigt in einem Detail die Wassertier-Beförderungsvorrichtung zum Zeitpunkt eines aktiven Ausschwimmvorgangs beim Aufstieg.
Figur 12B zeigt in einem Detail die Wassertier-Beförderungsvorrichtung zum Zeitpunkt eines passiven Ausschwimmvorgangs beim Aufstieg.
Figur 13A zeigt in einer Seitenansicht von rechts die Wassertier-Beförderungsvorrichtung aus Figur 12A.
Figur 13B zeigt in einer Seitenansicht von rechts die Wassertier-Beförderungsvorrichtung aus Figur 12B.

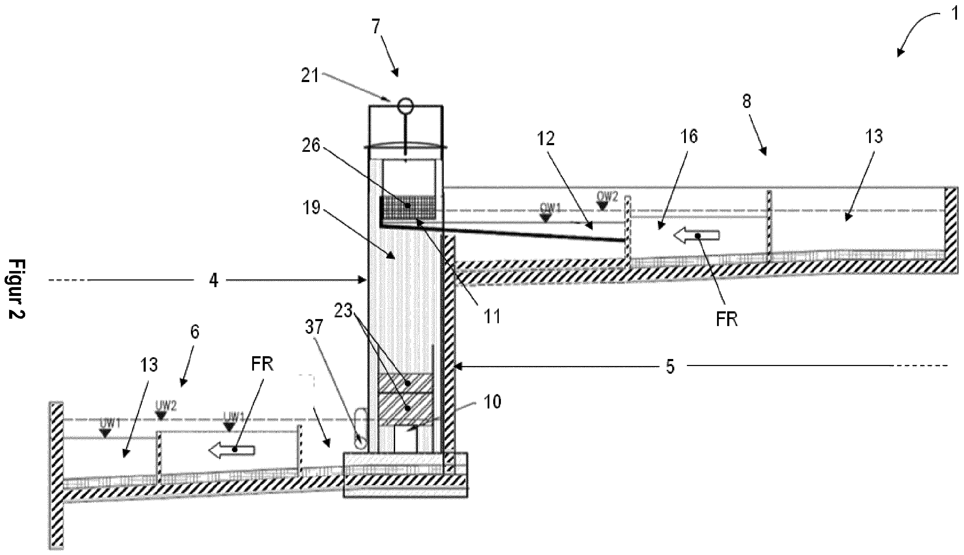

Figur 1 zeigt in einer Draufsicht eine Wassertier-Beförderungsvorrichtung 1 gemäß einer erfindungsgemäßen Ausführungsform. Figur 2 zeigt einen Längsschnitt dieser Wassertier-Beförderungsvorrichtung 1 entlang der Flussrichtung FR und der Schnittlinie E-E. Mittels dieser Wassertier-Beförderungsvorrichtung 1 können Wassertiere 2 eine Barriere 3 in einem Gewässer überwinden, wobei sowohl das Aufsteigen als auch das Absteigen ermöglicht wird. Das Gewässer wird durch die Barriere 3 in ein Unterwasser 4 und ein Oberwasser 5 getrennt. Die Wassertier-Beförderungsvorrichtung 1 umfasst dabei im Wesentlichen eine Unterwasser-Beckenkaskade 6, einen Fischlift 7 und eine Oberwasser-Beckenkaskade 8.

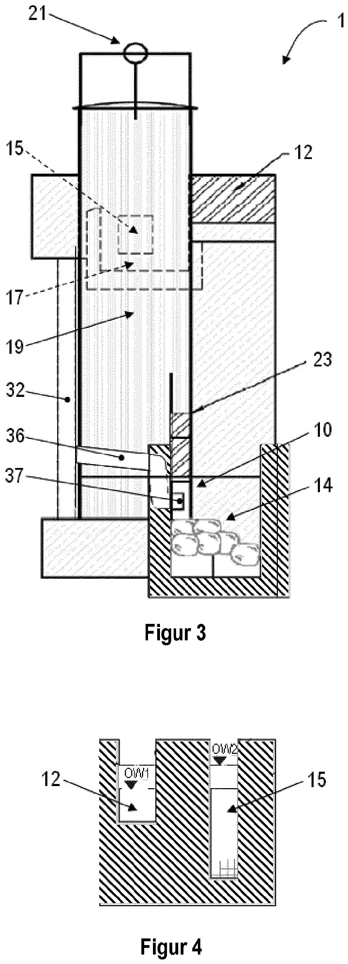

Die Unterwasser-Beckenkaskade 6 ist vorzugsweise als Schlitzpass 9 ausgeführt und an einen Aufstiegseinlass 10 eines im Wesentlichen vertikalen Schachtes 19 angeschlossen. Die Oberwasser-Beckenkaskade 8 ist vorzugsweise als Schlitzpass 9 ausgeführt und an eine, einem Aufstiegsauslass 11 des Schachtes 19 nachfolgend ausgebildete, Auslassrinne 12 angeschlossen. Einzelne Becken 13 weisen der Flussrichtung FR folgend abfallende Beckenwasserspiegel auf, wobei die Wasserspiegeldifferenz zwischen benachbarten Becken 13 vorzugsweise 10 bis 20 cm beträgt. Durch diese Anordnung der Becken 13 im Unterwasser 4 und Oberwasser 5 ist es beispielsweise möglich, optimal an einen Turbinenauslauf bei Wasserkraftanlagen anzubinden. Zusätzlich wird im Unterwasser 4 die Differenz zwischen minimalem Bemessungswasserspiegel im Unterwasser UW1 und maximalem Bemessungswasserspiegel im Unterwasser UW2 verringert. Durch eine kontinuierliche Anrampung 14, wie in Figur 3 dargestellt, lässt sich der Aufstiegseinlass 10 in den Fischlift 7 sowohl für oberflächennahe Wassertiere 2 als auch für bodenorientierte Wassertiere 2 optimal ausrichten. Im Oberwasser 5 dienen die Becken 13 dem Wasserspiegelabbau von beispielsweise einem Stauziel bis zu einem Abstiegseinlass 15 beim Fischlift 7. Dieser Wasserspiegelabbau bewirkt, dass der minimale Bemessungswasserspiegel im Oberwasser OW1 im unmittelbaren Bereich des Fischliftes 7 während der Abstiegsphase um ein definiertes Maß niedriger liegt als der maximale Bemessungswasserspiegel im Oberwasser OW2.

Die Auslassrinne 12 ist ein strukturloses Element, beispielsweise aus Beton, Metall oder Kunststoff, und mündet in ein Zwischenbecken 16, dem weitere Becken 13 der Oberwasser-Beckenkaskade 8 nachgeordnet sein können. Der Boden der Auslassrinne 12 fällt dabei vom Aufstiegsauslass 11 weg ab. Da sich während eines Abstiegs der Wasserspiegel in der Auslassrinne 12 senkt und hierdurch ein Leitimpuls entsteht, werden die Wassertiere 2 zum Ausschwimmen aus der Auslassrinne 12 in das Zwischenbecken 16 motiviert. Die Auslassrinne 12 kommuniziert auf diese Weise mit dem Oberwasser 5. Optional können zusätzlich Pumpen installiert werden, welche den Leitimpuls verstärken und optimieren.

Die Wassertier-Beförderungsvorrichtung 1 sieht weiters ein von der Auslassrinne 12 getrenntes Abstiegsbecken 17 im Oberwasser 5 vor, das sich vom Abstiegseinlass 15 bis zum Zwischenbecken 16 erstreckt. Sowohl der Boden des Abstiegsbeckens 17 als auch dessen Mündungsöffnung zum Zwischenbecken 16 liegen dabei niedriger als der Boden der Auslassrinne 12 beziehungsweise deren Mündungsöffnung zum Zwischenbecken 16. Figur 3 und Figur 4 stellen diese Zusammenhänge dar.

Um im Wesentlichen 90 Winkelgrad versetzt vom Abstiegseinlass 15 befindet sich der Aufstiegsauslass 11, dessen Unterkante über dem Höhenniveau der Oberkante des Abstiegseinlasses 15 ausgebildet ist. An Führungsnuten, die vom Höhenniveau der Unterkante des Aufstiegsauslasses 11 bis zur Oberkante des Schachtes 19 ausgebildet sind, wird ein Gitter 26 geführt. Wie in Figur 10A dargestellt, ist dieses Gitter 26 in seinem Grundzustand abgesenkt und verhindert so das ungewollte Einschwimmen von Wassertieren 2 in den Transportbehälter 18 beziehungsweise in den Schacht 19. Beim Hebevorgang greift der Transportbehälter 18 in das Gitter 26 ein, und nimmt es nach oben mit, wodurch der Aufstiegsauslass 11 freigegeben wird. Das Gitter 26 befindet sich in seinem angehobenen Zustand, wie in Figur 10B dargestellt. Beim Senken des Transportbehälters 18 wird das Gitter 26 wieder in seine Schutzstellung geführt.

Das obere Ende des Schachtes 19 weist eine lichtdurchlässige Kuppel auf. Der Wasserspiegel im Schacht 19 wird über zwei Schütze gesteuert, die zum Öffnen und Verschließen von den ersten drei Öffnungen ausgebildet sind. Erstens ein Kombinationsschütz 23, das mit einer Steuerung bedient werden kann und zum Öffnen und Verschließen des Aufstiegseinlasses 10, der sich unterhalb des minimalen Bemessungswasserstandes im Unterwasser UW1 befindet, und des Abstiegsauslasses 22, der sich oberhalb des maximalen Bemessungswasserstandes im Unterwasser UW2 befindet, dient. Zweitens ein Abstiegsschütz 25, das zum Öffnen und Verschließen des Abstiegseinlasses 15, der sich unterhalb des minimalen Bemessungswasserstandes im Oberwasser OW1 befindet, dient.

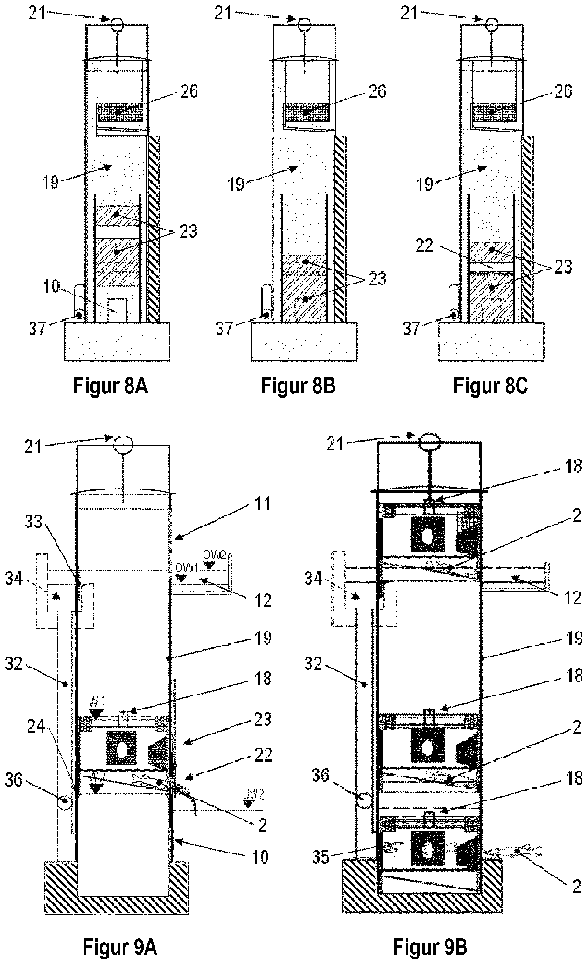

In den Figuren 8A bis 8C sind die unterschiedlichen Stellungen des Kombinationsschützes 23 dargestellt. In Figur 8A, beispielsweise beim Einschwimmvorgang der Wassertiere 2, befindet sich das Kombinationsschütz 23 in seiner obersten Position, wodurch der Aufstiegseinlass 10 geöffnet und der Abstiegsauslass 22 verschlossen ist. In Figur 8B, beispielsweise beim Anheben des Transportbehälters 18, befindet sich das Kombinationsschütz 23 in seiner untersten Position, wodurch der Aufstiegseinlass 10 und der Abstiegsauslass 22 verschlossen sind. In Figur 8C, beispielsweise beim Senken des Transportbehälters 18, befindet sich das Kombinationsschütz 23 zuerst in einer Position, die den Aufstiegseinlass 10 verschlossen hält und den Abstiegsauslass 22 teilweise beziehungsweise vollständig öffnet.

In Figur 9A sind Blockierelemente 24 dargestellt. Diese werden beim Heben des Trabsportbehälters 18 aktiviert, und verhindern beim Abstieg ein Senken des Transportbehälters 18 unter das Höhenniveau für den Auslassvorgang beim Abstieg. Erreichen die Schwimmkörper 20 beim Abstieg das Niveau des maximalen Bemessungswasserspiegels im Schacht W1, halten die Blockierelemente 24 die Unterkante des Transportbehälters 18 auf Höhe der Unterkante des Abstiegsauslasses 22. Nun hebt sich das Kombinationsschütz 23 in seinem oberen Teil und der Abstiegsauslasses 22 wird vollständig geöffnet, um den Wassertieren 2 das Ausschwimmen zu ermöglichen. Dieser Ausschwimmvorgang dauert vom Erreichen des maximalen Bemessungswasserspiegels im Schacht W1 bis zum Erreichen des minimalen Bemessungswasserspiegels im Schacht W2. Wird der minimale Bemessungswasserspiegel im Schacht W2 erreicht, beginnt sich das Kombinationsschütz 23 in seinem unteren Teil zu heben, bis der Aufstiegseinlass 10 geöffnet und der Abstiegsauslass 22 wieder verschlossen ist. Durch diesen Vorgang werden die Blockierelemente 24 wieder deaktiviert und geben den Transportbehälter 18 frei, sodass dieser mit dem sinkenden Wasserspiegel im Schacht 19 zum Boden des Schachtes 19 sinkt.

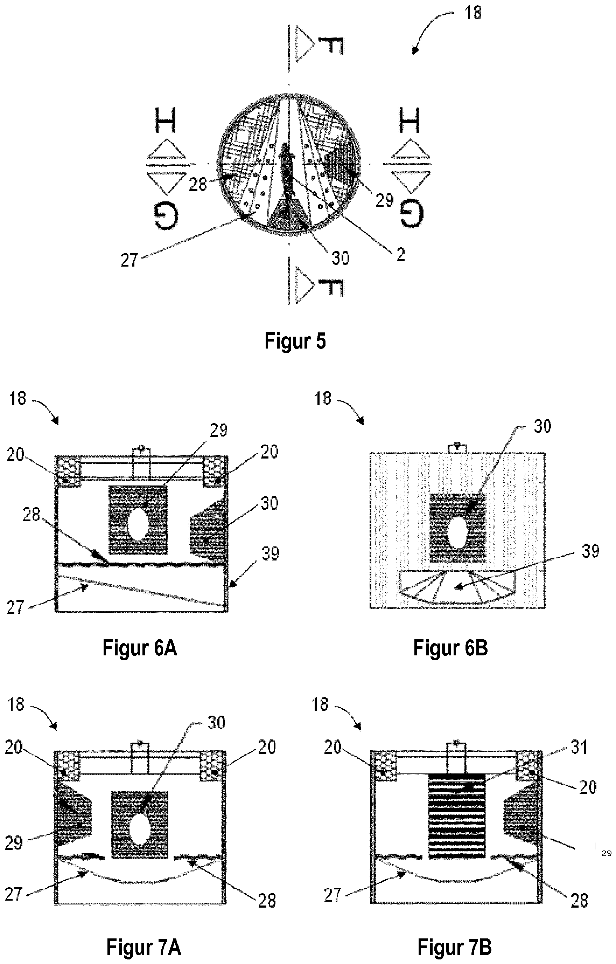

Ein erfindungsgemäßer Transportbehälter 18 ist in den Figuren 5 bis 7B dargestellt. Im Fischlift 7 wird der Transportbehälter 18 in einem, vorzugsweise kreisförmigen, Schacht 19 durch Schwimmkörper 20 entlang von Schienen aufwärts und abwärts geführt und folgt so im Wesentlichen dem Wasserspiegel im Schacht 19. Ergänzend ist ein Mittel 21, insbesondere ein Kran, vorgesehen, welcher einen Hebevorgang des Transportbehälters 18 über das Niveau des Wasserspiegels im Schacht 19 ermöglicht. Der Transportbehälter 18 weist vier Öffnungen auf: Erstens eine Aufstiegs-Einlassöffnung, die mit einer Aufstiegsreuse 30 versehen ist, und dem Aufstiegseinlass 10 des Schachtes 19 zugewandt ist. Zweitens eine Auslassöffnung 39, die beim Aufstieg dem Aufstiegsauslass 11 und beim Abstieg dem Abstiegsauslass 22 zugewandt ist. Drittens eine Abstiegs-Einlassöffnung, die mit einer Abstiegsreuse 29 versehen ist, und dem Abstiegseinlass 15 des Schachtes 19 zugewandt ist. Viertens eine Dotationsöffnung 31, die der Dotation des Leitstromes beim Einschwimmvorgang dient.

Der Transportbehälter 18 ist so gestaltet, dass keine natürlichen Elemente, welche den transportierten Wassertieren 2 den Charakter von Ersatzhabitaten suggerieren und somit die Verweildauer der einzelnen Wassertiere 2 ungewollt verlängern, verarbeitet sind. Geometrie und Strukturierung sind dabei so gewählt, dass sie einem potentiellen Prädationsdruck im Transportbehälter 18 in allen Phasen bestmöglich entgegenwirken. Die Wände des Transportbehälters 18 sind dabei vorzugsweise aus Kunststoff, glasfaserverstärktem Kunststoff oder Metall konstruiert, und sind wasserundurchlässig.

Der Transportbehälter 18 weist weiters eine perforierte, vorzugsweise metallene Bodenplatte 27 an seiner Unterseite und Schwimmelemente 20, vorzugsweise in ringförmiger Anordnung, an seiner Oberseite auf. Die Bodenplatte 27 weist eine Neigung in Richtung der Auslassöffnung 39 auf. So ergibt sich für die Bodenplatte 27 ein konischer Querschnitt. Im Wesentlichen auf dem Höhenniveau der Oberkante der Bodenplatte 27 sind Fischschutzelemente 28 ausgebildet. Diese gewähren kleineren Wassertieren 2 Einstand und verhindern, dass größere Wassertiere 2, beispielsweise Raubfische, diesen nachstellen können. Es können auch andere Elemente, wie beispielsweise Hohlraumsysteme, als Fischschutzelement 28 vorgesehen werden.

Um ein Zurückschwimmen der Wassertiere 2 während der Stellung im Unterwasser 4 beziehungsweise im Oberwasser 5 zu verhindern, weist der Transportbehälter 18 an seiner Abstiegs-Einlassöffnung eine Abstiegsreuse 29 und an seiner Aufstiegs-Einlassöffnung eine Aufstiegsreuse 30 auf.

An der, der Aufstiegsreuse 30 gegenüberliegenden, Seite weist der Transportbehälter 18 eine Dotationsöffnung 31 auf, welche beispielsweise aus horizontalen Gitterelementen mit einem Abstand von vorzugsweise kleiner als ein Zentimeter besteht. Die Dotationsöffnung 31 dient der Dotation eines Leitstromes, und die erfindungsgemäße Ausführung mit horizontalen Gitterelementen verhindert ein unerwünschtes Einschwimmen von Wassertieren 2 in ein Dotationsrohr 32. Die Dotationsöffnung 31 wird beim Heben und Senken des Transportbehälters 18 im Bereich des Oberwassers 5 automatisch durch Mittel 33, vorzugsweise Putzborsten, die im Schacht 19 angeordnet sind, gereinigt.

Das Dotationsrohr 32 wird über einen Rohreinlass aus einem Dotationsbauwerk 34 im Bereich des Oberwassers 5 mit Wasser gespeist, wobei das Dotationsbauwerk 34 einen seitlichen Überlauf mit einem Schwimmstoffabweiser, welcher ebenso das Einschwimmen von Wassertieren 2 verhindert, aufweist. Dieser Überlauf liegt dabei höher als der minimale Bemessungswasserstand im Oberwasser OW1. Das Dotationsrohr 32 führt vom Dotationsbauwerk 34 zu einem ersten Auslass 35 im Bereich des Bodens des Schachtes 19. Dieses dient der Dotation des Leitstromes während des Einschwimmvorganges, wobei während des Einschwimmvorganges die Dotationsöffnung 31 des Transportbehälters 18 auf Höhe dieses ersten Auslasses 35 zu liegen kommt. Das Dotationsrohr 32 bildet weiters über eine Abzweigung ein zweites Rohr 36 aus, welches in einem zweiten Auslass 37 über das dem Fischlift 7 am nächsten gelegene Einstiegsbecken der Unterwasser-Beckenkaskade 6 in das Unterwasser 4 mündet. Dieses zweite Rohr 36 weist einen geringeren Durchmesser als das Dotationsrohr 32 beziehungsweise der erste Auslass 35 auf. Die Abzweigung des zweiten Rohres 36 liegt dabei in etwa auf dem Höhenniveau des maximalen Bemessungswasserstandes im Unterwasser UW2.

Die Wasserdurchflussmengen des Dotationsrohres 32 und des zweiten Rohres 36 werden dabei über die Schütze reguliert, wodurch während des Einschwimmvorganges der überwiegende Teil des Wassers als Leitstrom für den Schacht 19 zur Verfügung steht und so die Wassertiere 2 in den Transportbehälter 18 lockt. Wird das Kombinationsschütz 23 vollständig geschlossen, hebt sich der Wasserspiegel im Schacht 19 und das gesamte zuströmende Wasser aus dem Dotationsbauwerk 34 wird über das zweite Rohr 36 abgeleitet. Mit Ausnahme der Abstiegsphase wird das Unterwasser 4 im Bereich der Wassertier-Beförderungsvorrichtung 1 ausschließlich über das Dotationsbauwerk 34 beschickt.

Figur 11A und Figur 11B zeigen jeweils die Wassertier-Beförderungsvorrichtung 1 zu einem Zeitpunkt des Einschwimmvorgangs bei minimalem Bemessungswasserspiegel im Unterwasser UW1 beziehungsweise bei maximalem Bemessungswasserspiegel im Unterwasser UW2. Der Transportbehälter 18 befindet sich dabei in seiner untersten Stellung im Schacht 19 und über das Dotationsrohr 32 und den ersten Auslass 35 wird ein Leitstrom im Bereich des Bodens des Schachtes 19 ausgebildet. Aufgrund des angehobenen Kombinationsschützes 23 ist der Aufstiegseinlass 10 geöffnet und die vom Leitstrom geleiteten Wassertiere 2 schwimmen über den Aufstiegseinlass 10 und durch die Aufstiegsreuse 30 in den Transportbehälter 18 ein. Die bodenorientierten und kleinen Wassertiere 2 werden im Transportbehälter 18 durch die vorhandenen Fischschutzelemente 28 geschützt. Der Transportbehälter 18 ist dermaßen ausgebildet, dass er sowohl bei minimalem Bemessungswasserspiegel im Unterwasser UW1 als auch bei maximalem Bemessungswasserspiegel im Unterwasser UW2 funktionsfähig ist. Dabei liegt der Transportbehälter 18 bei minimalem Bemessungswasserspiegel im Unterwasser UW1 am Boden des Schachtes 19 auf, bei maximalem Bemessungswasserspiegel im Unterwasser UW2 wird der Transportbehälter 18 mittels der Schwimmkörper 20 in Position gehalten.

Das Heben des Transportbehälters 18 wird durch Senken des Kombinationsschützes 23 und dem damit einhergehenden Verschließen des Aufstiegseinlasses 10 eingeleitet. Durch das vollständig geschlossene Kombinationsschütz 23 kommt es im Schacht 19 zu einem Anstieg des Wasserspiegels im Schacht 19, sodass nun das zufließende Wasser aus dem Dotationsrohr 32 über das zweite Rohr 36 in die Unterwasser-Beckenkaskade 6 fließt. Es ist also zu jedem Zeitpunkt sichergestellt, dass Wassertiere 2, die aufsteigen wollen, sich vorzugsweise im Bereich des Aufstiegseinlasses 10 konzentrieren.

Das Heben des Transportbehälters 18 besteht im Wesentlichen aus zwei Sequenzen. In der ersten Sequenz wird der Transportbehälter 18 von den Schwimmkörpern 20 mit dem Wasserspiegel im Schacht 19 angehoben. Erreicht der Wasserspiegel im Schacht 19 das Niveau des Wasserspiegels im Bereich des Oberwassers 5, so wird der Kran 21 aktiviert, insbesondere durch Einschnappen eines Kranhakens. Der Kran 21 hebt den Transportbehälter 18 auf ein Höhenniveau für einen aktiven Ausschwimmvorgang, verweilt dort über eine bestimmte Zeitspanne, und leitet im Anschluss bei einer verringerten Hubgeschwindigkeit von vorzugsweise wenigen Millimetern bis Zentimetern pro Sekunde einen passiven Ausschwimmvorgang ein. Durch das Heben des Transportbehälters 18 wird das Gitter 26 angehoben und gibt den Aufstiegsauslass 11 für den Ausschwimmvorgang frei. Zusätzlich wird die Dotationsöffnung 31 des Transportbehälters 18 durch die im Schacht 19 angeordneten Mittel 33 gereinigt.

Figur 12A und Figur 13A zeigen in einem Detail die Wassertier-Beförderungsvorrichtung 1 zum Zeitpunkt eines aktiven Ausschwimmvorgangs, und Figur 12B und Figur 13B zeigen in einem Detail die Wassertier-Beförderungsvorrichtung 1 zum Zeitpunkt eines passiven Ausschwimmvorgangs. Beim aktiven Ausschwimmvorgang ist der Wasserspiegel im Transportbehälter 18 deutlich verringert. Die Wassertiere 2 sind aufgrund der nunmehr unkomfortablen Verhältnisse im Transportbehälter 18 zum Ausschwimmen durch den Aufstiegsauslass 11 motiviert. Sollten dennoch Wassertiere 2 im Transportbehälter 18 verbleiben, werden diese während des passiven Ausschwimmvorgangs mittels der geneigten, konischen Bodenplatte 27 sanft ausgeworfen, wobei sich am Ende dieses Ausschwimmvorgangs kein Wasser mehr im Transportbehälter 18 befindet. Die Auslassrinne 12 ist vollkommen strukturlos gestaltet und es wird kein Sohlsubstrat aufgebracht, um die Wassertiere 2 nicht ungewollt zum Verweilen zu motivieren. Einzig die Anordnung von vereinzelter Fischschutzelementen 28 ist vorgesehen. Auf diese Weise wird ein rascher und sicherer Aufstieg in die Oberwasser-Beckenkaskade 8 und anschließend in das stromaufwärtige Oberwasser 5 ermöglicht.

Im Anschluss an den passiven Ausschwimmvorgang erfolgt die Öffnung des Abstiegsschützes 25. Hierdurch sinkt der Wasserspiegel Bereich des Oberwassers 5. Gleichzeitig wird die Öffnung des Kombinationsschützes 23 derart geregelt, dass der Transportbehälter 18 im Wesentlichen auf seinem aktuellen Höhenniveau bleibt. Der Wasserspiegel in der Auslassrinne 12 sinkt zu diesem Zeitpunkt auf ein definiertes Maß, sodass die Auslassrinne 12 als Aufenthaltsort für die Wassertiere 2 zusehends unattraktiv wird. Demzufolge schwimmen auch die letzten verbliebenen Wassertiere 2 aufgrund des, vom Senkvorgang des Wasserspiegels herrührenden, Leitimpulses aus der Auslassrinne 12 aus. Optional kann dieser Leitimpuls durch Pumpen verstärkt werden.

Durch die Öffnung des Abstiegsschützes 25 wird der Abstiegseinlass 15 freigegeben, und es werden zum Abstieg motivierte Wassertiere 2 in den Transportbehälter 18 gelockt. Optional können solche Wassertiere 2 durch eine zusätzliche Abstiegsbeckenreuse 38 am Eingang des Abstiegsbeckens 17 im Bereich des Abstiegseinlasses 15 konzentriert werden. Nach einer definierten Verweildauer wird das Abstiegsschütz 25 wieder geschlossen. Hierdurch erhöht sich der Wasserspiegel im Oberwasser 5 wieder und das Dotationsrohr 32 wird wieder über das Dotationsbauwerk 34 mit Wasser gespeist. Die Öffnung des Kombinationsschützes 23 wird nun derart erhöht, dass sich der Transportbehälter 18 langsam zum Unterwasser 4 absenkt. Gleichzeitig senkt sich das Gitter 26 und verschließt den Aufstiegsauslass 11. Erreicht der Wasserspiegel im Schacht 19 den maximalen Bemessungswasserspiegel im Schacht W1, wird das Kombinationsschütz 23 so positioniert, dass der Aufstiegseinlass 10 verschlossen bleibt und der Abstiegsauslass 22 vollständig geöffnet ist, um den sich im Transportbehälter 18 befindlichen Wassertieren 2 das Ausschwimmen in das Unterwasser 4 zu ermöglichen.

Es kann erwähnt werden, dass bei einer erfindungsgemäßen Wassertier-Beförderungsvorrichtung 1 der Bereich im Oberwasser 5 beziehungsweise Unterwasser 4, insbesondere die Oberwasser-Beckenkaskade 8 beziehungsweise Unterwasser-Beckenkaskade 6, auch andersartig ausgebildet sein kann, beispielsweise durch eine Vielzahl von Becken 13 oder ohne die Ausführung als Schlitzpass 9.

Weiters ist zu erwähnen, dass die erfindungsgemäße Wassertier-Beförderungsvorrichtung 1 auch an nicht fließenden Gewässern genutzt werden kann.

### Liste der Positionsnummern:

- 1: Wassertier-Beförderungsvorrichtung
- 2: Wassertiere
- 3: Barriere
- 4: Unterwasser
- 5: Oberwasser
- 6: Unterwasser-Beckenkaskade
- 7: Fischlift
- 8: Oberwasser-Beckenkaskade
- 9: Schlitzpass
- 10: Aufstiegseinlass
- 11: Aufstiegsauslass
- 12: Auslassrinne
- 13: Becken
- 14: Anrampung
- 15: Abstiegseinlass
- 16: Zwischenbecken
- 17: Abstiegsbecken
- 18: Transportbehälter
- 19: Schacht
- 20: Schwimmkörper
- 21: Mittel
- 22: Abstiegsauslass
- 23: Kombinationsschütz
- 24: Blockierelemente
- 25: Abstiegsschütz
- 26: Gitter
- 27: Bodenplatte
- 28: Fischschutzelemente
- 29: Abstiegsreuse
- 30: Aufstiegsreuse
- 31: Dotationsöffnung
- 32: Dotationsrohr
- 33: Mittel
- 34: Dotationsbauwerk
- 35: Erster Auslass
- 36: Zweites Rohr
- 37: Zweiter Auslass
- 38: Abstiegsbeckenreuse
- 39: Auslassöffnung
- FR: Flussrichtung
- OW1: Minimale Bemessungswasserspiegel im Oberwasser
- OW2: Maximale Bemessungswasserspiegel im Oberwasser
- UW1: Minimale Bemessungswasserspiegel im Unterwasser
- UW2: Maximale Bemessungswasserspiegel im Unterwasser
- W1: Maximale Bemessungswasserspiegel im Schacht
- W2: Minimale Bemessungswasserspiegel im Schacht

## Patentansprüche

1. An einem durch eine Barriere (3) in ein Unterwasser (4) und ein Oberwasser (5) getrenntes Gewässer angeordnete Vorrichtung zum Befördern von Wassertieren (2) zwischen dem Unterwasser (4) und dem Oberwasser (5), mit einem Schacht (19), der einen verschließbaren, unterwasserseitigen Aufstiegseinlass (10) und einen oberwasserseitigen Aufstiegsauslass (11) aufweist, und mit einem im Schacht (19) zwischen dem Aufstiegseinlass (10) und dem Aufstiegsauslass (11) auf- und abbewegbaren Transportbehälter (18), wobei der Transportbehälter (18) eine dem Aufstiegseinlass (10) zugewandte Aufstiegs-Einlassöffnung und eine beim Aufstieg dem Aufstiegsauslass (11) zugewandte Auslassöffnung (39) aufweist, **dadurch gekennzeichnet, dass** im Schacht (19) ein oberwasserseitiger Abstiegseinlass (15) und ein über dem Unterwasser positionierter Abstiegsauslass (22) ausgebildet sind, wobei die Auslassöffnung (39) des Transportbehälters (18) beim Abstieg dem Abstiegsauslass (22) zugewandt ist, und wobei im Transportbehälter (18) eine Abstiegs-Einlassöffnung ausgebildet ist, die dem Abstiegseinlass (15) des Schachtes (19) zugewandt ist.

2. Wassertier-Beförderungsvorrichtung (1) nach Anspruch 1, **dadurch gekennzeichnet, dass** eine sich vom Aufstiegsauslass (11) erstreckende, mit dem Oberwasser (5) kommunizierende Auslassrinne (12) vorgesehen ist und dass ein sich zum Abstiegseinlass (15) erstreckendes, mit dem Oberwasser (5) kommunizierendes Abstiegsbecken (17) vorgesehen ist, wobei die Auslassrinne (12) und das Abstiegsbecken (17) voneinander abgetrennt sind.

3. Wassertier-Beförderungsvorrichtung (1) nach Anspruch 2, **dadurch gekennzeichnet, dass** der Boden der Auslassrinne (12) vom Aufstiegsauslass (11) weg abfällt.

4. Wassertier-Beförderungsvorrichtung (1) nach Anspruch 2 oder 3, **dadurch gekennzeichnet, dass** der Boden der Auslassrinne (12) höher liegt als der Boden des Abstiegsbeckens (17).

5. Wassertier-Beförderungsvorrichtung (1) nach einem der Ansprüche 2 bis 4, **dadurch gekennzeichnet, dass** das Abstiegsbecken (17) und die Auslassrinne (12) in Richtung des Oberwassers (5) in ein Zwischenbecken (16) münden, wobei der Boden der Mündungsöffnung des Abstiegsbeckens (17) tiefer liegt als die Mündungsöffnung der Auslassrinne (12).

6. Wassertier-Beförderungsvorrichtung (1) nach einem der Ansprüche 2 bis 5, **dadurch gekennzeichnet, dass** das Abstiegsbecken (17) nur durch eine Abstiegsbeckenreuse (38) zugänglich ist.

7. Wassertier-Beförderungsvorrichtung (1) nach einem der vorhergehenden Ansprüche, **dadurch gekennzeichnet, dass** das obere Ende des Schachtes (19) eine lichtdurchlässige Kuppel aufweist.

8. Wassertier-Beförderungsvorrichtung (1) nach einem der vorhergehenden Ansprüche, **dadurch gekennzeichnet, dass** der Schacht (19) mit einem aktivier- und deaktivierbaren Blockierelement (24) versehen ist, wobei der Transportbehälter (18) beim Senken von dem Blockierelement (24) im Wesentlichen auf dem Höhenniveau des Abstiegsauslasses (22) gehalten wird.

9. Wassertier-Beförderungsvorrichtung (1) nach einem der vorhergehenden Ansprüche, **gekennzeichnet durch** Mittel (21) zum Heben und Senken des Transportbehälters (18), insbesondere einen Kran.

10. Wassertier-Beförderungsvorrichtung (1) nach einem der vorhergehenden Ansprüche, **dadurch gekennzeichnet, dass** der Aufstiegsauslass (11) durch ein Gitter (26) vor dem Einschwimmen von Wassertieren (2) geschützt ist, wobei der Transportbehälter (18) beim Hebevorgang in das Gitter (26) eingreift und es nach oben mitnimmt und dadurch den Aufstiegsauslass (11) freigibt.

11. Wassertier-Beförderungsvorrichtung (1) nach einem der vorhergehenden Ansprüche, **dadurch gekennzeichnet, dass** der Aufstiegsauslass (11) beziehungsweise die Auslassrinne (12) an eine Oberwasser-Beckenkaskade (8) mit ansteigenden Beckenwasserspiegeln angeschlossen ist, wobei vorzugsweise die Wasserspiegeldifferenz zwischen benachbarten Becken (13) 10 bis 20 cm beträgt.

12. Wassertier-Beförderungsvorrichtung (1) nach einem der vorhergehenden Ansprüche, **dadurch gekennzeichnet, dass** der Aufstiegseinlass (10) an eine Unterwasser-Beckenkaskade (6) mit abfallenden Beckenwasserspiegeln angeschlossen ist, wobei vorzugsweise die Wasserspiegeldifferenz zwischen benachbarten Becken (13) 10 bis 20 cm beträgt.

13. Wassertier-Beförderungsvorrichtung (1) nach einem der vorhergehenden Ansprüche, **dadurch gekennzeichnet, dass** ein Dotationsrohr (32) einen oberwasserseitigen Rohreinlass sowie einen ersten Auslass (35) in den Schacht (19) aufweist, und dass ein zweites Rohr (36), das einen zweiten Auslass (37) im Bereich des Unterwassers (4) aufweist, in etwa auf dem Höhenniveau des maximalen Bemessungswasserstandes im Unterwasser UW2 vom Dotationsrohr (32) abzweigt, wobei vorzugsweise der Rohreinlass vom Abstiegseinlass (15) durch einen Überlauf getrennt ist, der höher liegt als der unterste Abschnitt des Abstiegseinlasses (15).

14. Wassertier-Beförderungsvorrichtung (1) nach Anspruch 13, **dadurch gekennzeichnet, dass** der erste Auslass (35) des Dotationsrohres (32) einen größeren Durchmesser als der zweite Auslass (37) des zweiten Rohres (36) aufweist.

15. Wassertier-Beförderungsvorrichtung (1) nach einem der vorhergehenden Ansprüche, **dadurch gekennzeichnet, dass** der Aufstiegseinlass (10), der Abstiegseinlass (15) und der Abstiegsauslass (22) mit, vorzugsweise als Schieber ausgebildeten, Schütze (23,25) zum Öffnen und Verschließen ausgestattet sind, wobei der Aufstiegseinlass (10) und der Abstiegsauslass (22) mit einer Kombinationsschütz (23) zum Öffnen und Verschließen ausgestattet sind.

16. Wassertier-Beförderungsvorrichtung (1) nach einem der vorhergehenden Ansprüche, **dadurch gekennzeichnet, dass** die Abstiegs-Einlassöffnung des Transportbehälters (18) eine Abstiegsreuse (29) aufweist und dass die Aufstiegs-Einlassöffnung des Transportbehälters (18) eine Aufstiegsreuse (30) aufweist.

17. Wassertier-Beförderungsvorrichtung (1) nach einem der vorhergehenden Ansprüche, **dadurch gekennzeichnet, dass** zumindest ein Abschnitt des Bodens des Transportbehälters (18) zur Auslassöffnung (39) hin nach unten zuläuft, wobei vorzugsweise der nach unten zulaufende Bodenabschnitt aus einer Bodenplatte (27) mit glatter Oberfläche besteht und die anderen Abschnitte des Bodens des Transportbehälters (18) perforiert sind.

18. Wassertier-Beförderungsvorrichtung (1) nach einem der vorhergehenden Ansprüche, **dadurch gekennzeichnet, dass** der Transportbehälter (18) eine der Aufstiegsreuse (30) gegenüberliegende Dotationsöffnung (31) und in Bodennähe ein Fischschutzelement (28) mit einem sich verjüngenden Raum oder ein Hohlraumelement aufweist.

## Claims

1. A device arranged at a body of water divided into a tailwater (4) and a headwater (5) by a barrier (3) for conveying aquatic animals (2) between the tailwater (4) and the headwater (5), comprising a well (19) having a closable ascent inlet (10) on the tailwater side and an ascent outlet (11) on the headwater side, and comprising a transport container (18) movable upwards and downwards in the well (19) between the ascent inlet (10) and the ascent outlet (11), wherein the transport container (18) has an ascent inlet opening facing the ascent inlet (10) and an outlet opening (39) facing the ascent outlet (11) during the ascent, **characterized in that** a descent inlet (15) on the headwater side and a descent outlet (22) positioned above the tailwater are formed in the well (19), wherein the outlet opening (39) of the transport container (18) faces the descent outlet (22) during the descent, and wherein a descent inlet opening facing the descent inlet (15) of the well (19) is formed in the transport container (18).

2. An aquatic-animal conveying device (1) according to claim 1, **characterized in that** an outlet groove (12) extending from the ascent outlet (11) and communicating with the headwater (5) is provided and that a descent reservoir (17) extending to the descent inlet (15) and communicating with the headwater (5) is provided, wherein the outlet groove (12) and the descent reservoir (17) are separated from each other.

3. An aquatic-animal conveying device (1) according to claim 2, **characterized in that** the bottom of the outlet groove (12) slopes downward from the ascent outlet (11).

4. An aquatic-animal conveying device (1) according to claim 2 or 3, **characterized in that** the bottom of the outlet groove (12) is located higher than the bottom of the descent reservoir (17).

5. An aquatic-animal conveying device (1) according to any of claims 2 to 4, **characterized in that** the descent reservoir (17) and the outlet groove (12) run, toward the headwater (5), into an intermediate reservoir (16), wherein the bottom of the orifice opening of the descent reservoir (17) is located lower than the orifice opening of the outlet groove (12).

6. An aquatic-animal conveying device (1) according to any of claims 2 to 5, **characterized in that** the descent reservoir (17) is accessible only through a descent reservoir weir (38).

7. An aquatic-animal conveying device (1) according to any of the preceding claims, **characterized in that** the upper end of the well (19) exhibits a translucent dome.

8. An aquatic-animal conveying device (1) according to any of the preceding claims, **characterized in that** the well (19) is provided with an activatable and deactivatable blocking element (24), wherein the transport container (18) is kept essentially at the height level of the descent outlet (22) as the blocking element (24) is being lowered.

9. An aquatic-animal conveying device (1) according to any of the preceding claims, **characterized by** means (21) for lifting and lowering the transport container (18), in particular a crane.

10. An aquatic-animal conveying device (1) according to any of the preceding claims, **characterized in that** the ascent outlet (11) is protected with a grid (26) against aquatic animals (2) swimming in, wherein the transport container (18) engages the grid (26) during the lifting process, taking it along upwards, thereby releasing the ascent outlet (11).

11. An aquatic-animal conveying device (1) according to any of the preceding claims, **characterized in that** the ascent outlet (11) and the outlet groove (12), respectively, are attached to a headwater reservoir cascade (8) with rising reservoir water levels, wherein the water level difference between adjacent reservoirs (13) preferably amounts to 10 to 20 cm.

12. An aquatic-animal conveying device (1) according to any of the preceding claims, **characterized in that** the ascent inlet (10) is attached to a tailwater reservoir cascade (6) with falling reservoir water levels, wherein the water level difference between adjacent reservoirs (13) preferably amounts to 10 to 20 cm.

13. An aquatic-animal conveying device (1) according to any of the preceding claims, **characterized in that** a dotation pipe (32) has a pipe inlet on the headwater side as well as a first outlet (35) into the well (19) and that a second pipe (36), which has a second outlet (37) in the region of the tailwater (4), branches off from the dotation pipe (32) approximately at the height level of the maximum design water level in the tailwater UW2, wherein the pipe inlet is preferably separated from the descent inlet (15) by an overflow which is located higher than the lowermost section of the descent inlet (15).

14. An aquatic-animal conveying device (1) according to claim 13, **characterized in that** the first outlet (35) of the dotation pipe (32) has a larger diameter than the second outlet (37) of the second pipe (36).

15. An aquatic-animal conveying device (1) according to any of the preceding claims, **characterized in that** the ascent inlet (10), the descent inlet (15) and the descent outlet (22) are equipped with flood gates (23, 25) - preferably designed as slides - for opening and closing, whereas the ascent inlet (10) and the descent outlet (22) are equipped with a combination flood gate (23) for opening and closing.

16. An aquatic-animal conveying device (1) according to any of the preceding claims, **characterized in that** the descent inlet opening of the transport container (18) has a descent weir (29) and that the ascent inlet opening of the transport container (18) has an ascent weir (30).

17. An aquatic-animal conveying device (1) according to any of the preceding claims, **characterized in that** at least one section of the bottom of the transport container (18) tapers downward toward the outlet opening (39), wherein preferably the bottom section tapering downward consists of a base plate (27) with a smooth surface and the other sections of the bottom of the transport container (18) are perforated.

18. An aquatic-animal conveying device (1) according to any of the preceding claims, **characterized in that** the transport container (18) comprises a dotation opening (31) opposite to the ascent weir (30) and, close to the bottom, a fish protection element (28) with a tapering space or a hollow space element.

## Revendications

1. Dispositif, agencé sur un corps d'eau séparé par une barrière (3) en un volume d'eau aval (4) et un volume d'eau amont (5), pour transporter des animaux aquatiques (2) entre le volume d'eau aval (4) et le volume d'eau amont (5), comprenant un puits (19), qui comprend une entrée vers la montée (10), disposée du côté du volume d'eau aval et susceptible d'être obturée, et une sortie de montée (11) disposée du côté du volume d'eau amont, et comprenant un récipient de transport (18) capable d'être déplacé dans le puits (19) vers le haut et vers le bas entre l'entrée vers la montée (10) et la sortie de montée (11), dans lequel le récipient de transport (18) comporte une ouverture d'entrée de montée tournée vers l'entrée vers la montée (10) et une ouverture de sortie (39) tournée lors de la montée vers la sortie de montée (11),
**caractérisé en ce qu'**une entrée pour la descente (15) disposée du côté du volume d'eau amont et une sortie de descente (22) positionnée au-dessus du volume d'eau aval sont réalisées dans le puits (19), dans lequel l'ouverture de sortie (39) est tournée vers la sortie de descente (22) lors de la descente, et dans lequel une ouverture d'entrée de descente est réalisée dans le récipient de transport (18), ouverture qui est tournée vers l'entrée pour la descente (15) du puits (19).

2. Dispositif de transport pour animaux aquatiques (1) selon la revendication 1, **caractérisé en ce qu'**il est prévu une rigole de sortie (12) qui s'étend depuis la sortie de montée (11) et qui communique avec le volume d'eau amont (5), et **en ce qu'**il est prévu un bassin de descente (17) qui s'étend depuis l'entrée pour la descente (15) et qui communique avec le volume d'eau amont (5), dans lequel la rigole de sortie (12) et le bassin de descente (17) sont séparés l'un de l'autre.

3. Dispositif de transport pour animaux aquatiques (1) selon la revendication 2, **caractérisé en ce que** le fond de la rigole de sortie (12) descend en éloignement de la sortie de montée (11).

4. Dispositif de transport pour animaux aquatiques (1) selon la revendication 2 ou 3, **caractérisé en ce que** le fond de la rigole de sortie (12) est plus haut que le fond du bassin de descente (17).

5. Dispositif de transport pour animaux aquatiques (1) selon l'une des revendications 2 à 4, **caractérisé en ce que** le bassin de descente (17) et la rigole de sortie (12) débouchent en direction du volume d'eau amont (5) dans un bassin intermédiaire (16), dans lequel le fond de l'ouverture d'embouchure du bassin de descente (17) est plus basse que l'ouverture d'embouchure de la rainure de sortie (12).

6. Dispositif de transport pour animaux aquatiques (1) selon l'une des revendications 2 à 5, **caractérisé en ce que** le bassin de descente (17) n'est accessible que par une nasse (38) du bassin de descente.

7. Dispositif de transport pour animaux aquatiques (1) selon l'une des revendications précédentes, **caractérisé en ce que** l'extrémité supérieure du puits (19) comporte une coupole transparente à la lumière.

8. Dispositif de transport pour animaux aquatiques (1) selon l'une des revendications précédentes, **caractérisé en ce que** le puits (19) est pourvu d'un élément de blocage (24) susceptible d'être activé et désactivé, dans lequel le récipient de transport (18) est maintenu, lors de l'abaissement de l'élément de blocage (24), sensiblement au niveau de la hauteur de la sortie de descente (22).

9. Dispositif de transport pour animaux aquatiques (1) selon l'une des revendications précédentes, **caractérisé par** un moyen (21) pour lever et pour abaisser le récipient de transport (18), en particulier une grue.

10. Dispositif de transport pour animaux aquatiques (1) selon l'une des revendications précédentes, **caractérisé en ce que** la sortie de montée (11) est protégée par une grille (26) à l'encontre de la pénétration d'animaux aquatiques (2), dans lequel le récipient de transport (18) s'engage dans la grille (26) lors de l'opération de montée, et l'entraîne vers le haut et libère de ce fait la sortie de montée (11).

11. Dispositif de transport pour animaux aquatiques (1) selon l'une des revendications précédentes, **caractérisé en ce que** la sortie de montée (11) ou respectivement la rigole de sortie (12) est raccordée à une cascade (8) de bassins du volume d'eau amont présentant des bassins avec des niveaux d'eau montant, et de préférence la différence des niveaux d'eau entre bassins voisins (13) s'élève de 10 à 20 cm.

12. Dispositif de transport pour animaux aquatiques (1) selon l'une des revendications précédentes, **caractérisé en ce que** l'entrée pour la montée (10) est raccordée à une cascade de bassins (6) du volume d'eau aval présentant des bassins avec des niveaux d'eau descendant, et de préférence la différence des niveaux d'eau entre bassins voisins (13) s'élève de 10 à 20 cm.

13. Dispositif de transport pour animaux aquatiques (1) selon l'une des revendications précédentes, **caractérisé en ce qu'**un tube de remplissage (32) comporte une entrée de tube du côté du volume d'eau amont ainsi qu'une première sortie (35) dans le puits (19), et **en ce qu'**un second tube (36), qui comporte une seconde sortie (37) dans la région du volume d'eau aval (4), est ramifié depuis le tube de remplissage (32) approximativement au niveau de la hauteur du niveau d'eau mesuré maximum dans le volume d'eau aval UW2, dans lequel de préférence l'entrée du tube est séparée de l'entrée pour la descente (15) par un déversoir, qui est plus élevé que le tronçon le plus bas de l'entrée pour la descente (15).

14. Dispositif de transport pour animaux aquatiques (1) selon la revendication 13, **caractérisé en ce que** la première sortie (35) du tube de remplissage (32) a un diamètre plus grand que la seconde sortie (37) du second tube (36).

15. Dispositif de transport pour animaux aquatiques (1) selon l'une des revendications précédentes, **caractérisé en ce que** l'entrée pour la montée (10), l'entrée pour la descente (15) et la sortie de descente (22) sont équipées de protections (23, 25), réalisées de préférence sous forme de tiroirs, pour l'ouverture et pour l'obturation, et l'entrée pour la montée (10) et la sortie de la descente (22) sont équipées d'une protection combinée (23) pour l'ouverture et pour l'obturation.

16. Dispositif de transport pour animaux aquatiques (1) selon l'une des revendications précédentes, **caractérisé en ce que** l'ouverture d'entrée pour la descente du récipient de transport (18) comporte une nasse de descente (29), et **en ce que** l'ouverture d'entrée pour la descente du récipient de transport (18) comporte une nasse de descente (30).

17. Dispositif de transport pour animaux aquatiques (1) selon l'une des revendications précédentes, **caractérisé en ce qu'**au moins un tronçon du fond du récipient de transport (18) converge vers le bas jusqu'à l'ouverture de sortie (39), et le tronçon du fond qui converge vers le bas est de préférence constitué d'une plaque de fond (27) avec une surface lisse, et les autres tronçons du fond du récipient de transport (18) sont perforés.

18. Dispositif de transport pour animaux aquatiques (1) selon l'une des revendications précédentes, **caractérisé en ce que** le récipient de transport (18) comporte une ouverture de remplissage (31) à l'opposé de la nasse de montée (30) et **en ce qu'**il comporte au voisinage du fond un élément protecteur pour poissons (28) avec un espace qui va en se rétrécissant ou un élément à volume creux.
